# EUROPEAN PATENT SPECIFICATION

(11) **EP 2 809 209 B1**
(45) Date of publication and mention of the grant of the patent: **30.11.2016**
(21) Application number: 12766982.8
(22) Date of filing: 02.10.2012
(51) Int. Cl.: A47J 37/08

(54) **TOASTING DEVICES, SYSTEMS AND METHODS**
TOASTVORRICHTUNGEN, -SYSTEME UND -VERFAHREN
DISPOSITIF, SYSTÈME ET PROCÉDÉ PERMETTANT DE GRILLER UN ALIMENT

(30) Priority: 31.01.2012 GB 201201603
(43) Date of publication of application: 10.12.2014
(73) Proprietor: Bergen, Johan, 3271 Averbode (BE)
(72) Inventor: Bergen, Johan, 3271 Averbode (BE)
(74) Representative: IPLodge bvba
(86) International application number: PCT/EP2012/069484
(87) International publication number: WO 2013/113413

(56) References cited:
- WO-A1-01/00501
- US-A- 2 962 957
- US-A- 4 290 349

## Description

The present invention relates to the field of heating food articles, especially to devices, systems and methods for use in the field of toasting food articles and toasters.

### BACKGROUND TO THE INVENTION

Conventional toasters comprise one or more upright slots and banks of radiant heaters located at either side of each toaster slot. They allow rapid heating of food articles as for instance bread slices, pitta bread, waffles etc.

A good toaster should heat the food article completely, also internally, while not burning the outer surface of the food article. Instead, a crusty, slightly browned, outer side of the food article is often preferred at the end of the toasting process.

It is known to use metal racks or grilles which are inserted into the toaster to hold a whole sandwich or other food article together. This is cumbersome, and requires the insertion of metal objects by hand into the toaster where electrical voltages are typically present.

In GB 2367806, a container for heating food in a radiant heat applying device is disclosed, the container including a thermally conductive wall for receiving the radiant heat and transmitting it to food in the container, wherein the wall is made of a woven fabric having sufficient thermal conductivity to heat, in use, food contained in the container and coated and/or impregnated with electrically non-conductive and heat-resistant material.

It will be appreciated that good toasting practice requires that that the food article, should not be soaked or should not comprise substantial soaked portions when leaving the toaster, because e.g. the toast or the filling of the toast, e.g. cheese would have released water, acids and fats for instance.

Therefore toasting systems are preferably adapted for releasing such substances in use. On the other side, excess water, acids and fats, more generally moisture should not stay in the toaster as this is difficult to clean.

It will also be appreciated that seeing most of the food article when it is being toasted is a requirement for good toasting practice.

WO 01/00501 discloses a container for heating food in a toaster, the container comprising two facing walls sealed along three edges to define a pouch having an open mouth, the walls being formed of two layers, one outside the other, the outer layer comprising an electrically non-conductive and heat resistant material, and the inner layer being a woven fabric having sufficient thermal conductivity to heat, in use, food contained in the pouch when in an energised toaster. The container is for heating food in a radiant heat generating device, the container including at least one wall for receiving said radiant heat and made of a woven fabric coated and/or impregnated with an electrically non-conductive and heat resistant material, the wall having sufficient thermal conductivity to transmit said heat to food contained in the container. It is preferred that the outer layer is polytetrafluoroethylene (PTFE) or tetrafluoroethylene (TEFLON^{™}). It is also preferred that the inner layer is a weave of glass or poly (p-phenyleneterepthalamide) (KEVLAR^{™}) strands. However, other materials suitable for this purpose are not excluded.

US 2 962 957 disclose a device for holding a slice of bread for toasting in the toasting slot of an electric toaster so that the slice may be inserted in or removed from the toaster without awaiting the automatically timed or manually effected operation of the usual ejecting mechanism. The bread or toast holder comprises a pair of rectangular-shaped frames formed of a sheet of heat resistant material such as wire mesh and flanges are secured and arranged along the ends of the sheet so that there is a continuous flange around the edges of the sheet.

A toaster accessory is described US 4 290 349 in the form of a pair of hinged foraminous panels forming a holder adapted to hold one or several slices of bread therebetween. In its preferred use, a sandwich is placed between the two panels and the holder, when closed, is dimensioned to fit into a conventional toaster so that a pre-made sandwich may be conveniently toasted therein. The hinge connection between the two panels is self-adjusting and a locking device at the opposite end is able to lock at different thicknesses.

There is a need for improved toasting tools and methods.

### SUMMARY OF THE INVENTION

It is an object of the present invention to provide a folding food article holder for heating a food article of the toast type in a toasting device, with improved toasting experience.

This object is achieved with the devices, systems, methods and means according to the independent claims of the present invention. The dependent claims relate to preferred embodiments. According to a first aspect of the present invention, a folding food article holder for heating a food article, preferably of the toast type, in a toasting device is disclosed, the folding food article holder having at least a folded state and an unfolded state different from the folded state. The folding food article holder is adapted for receiving a food article by folding out of the unfolded state over or around the food article (in a certain view at least partially over or around, preferably supporting such that said food article cannot move with respect to the folding food article holder anymore, possibly completely wrapping the food article) and for, in the folded state, being inserted into the toasting device for toasting the food article by being exposed to a heating means within the toasting device. The food article holder comprises open fibre based, glass or Kevlar^{™} fiber based, mesh or grating. It will be appreciated by the skilled person that the open fibre based mesh or grating preferably does not comprise metal. Metal meshes or gratings of suitable dimensions would for instance be too rigid and too heat and current conductive.

The open grating or mesh is coated or impregnated with an anti-sticking material as described below.

For the purpose of the present description, a toasting device is a device which is adapted for toasting food articles. It can for instance be a toaster, including vertical toasters, adapted for toasting a food article in a vertical position when in use, as well as horizontal toasters, adapted for toasting a food article in a horizontal position when in use, or other types of state of the toasters known to the skilled person. It can for instance also be foldable toaster, as for instance certain sandwich toasters, for instance often used when preparing toasts known as "croque-monsieurs", sometimes also referred to as "clam shell grill".

It is an advantage of the present invention that the food container in the form of a folding food article holder can be flattened out after use, which simplifies cleaning, as a flat surface is more easily cleanable and as "dead" angles where dirt can accumulate are not present. Effective cleaning in a dishwasher is possible.
It is an aspect of the present invention that air can circulate through the open fibre mesh or grating. This provides a wide series of advantages. For instance, the hot air flow allows the removal of vapour from the toast during toasting, decreasing the possibility of a soaked portion of the toast.
Another advantage is that the airflow can reach most of the outer surface of the toast, as all or a substantial part of the folding food article holder comprises open grating or mesh structures.
Another advantage is that heat, e.g. the radiative or radiation heat, originating from heating elements in the toasting device (e.g. resistive heating elements) can directly be transferred to the toast in the regions corresponding to the openings of the mesh, resulting in a better crust formation.
Another advantage is that the toasting state of the toast, for instance substantially the whole main side surfaces of the toast, can be monitored visually, possibly after removing the toast and folding food article holder temporarily from the toasting device.
Another advantage is that the folding food article holder allows manipulation of the toast which is in a specific configuration. For instance, once a toast is configured by selecting ingredients and positioning them in between for instance two slices of bread, the folding food article holder substantially fixes the relative position of the toast and its ingredients by supporting the food article. The use of an open grating or mesh, thus comprising openings, is advantageous as portions of the toast can extend or bow (e.g. by deformation) into such openings, thereby better fixing the position op the toast (first order) or ingredients (second order). Another advantage is an increased level of hygiene; the toast itself does not need to be touched when manipulated. This also increases comfort as the risk of burning the fingers is also reduced.

According to the present invention, in a certain view of the wallet-type, the folding food article holder comprises a first portion (e.g. a first flap) and a second portion (e.g. a second flap), the first portion and the second portion each comprising an open, glass or Kevlar^{™}, fibre based mesh or grating, and being adapted for supporting the food article of the toast type when the folding food article holder is inserted in the toasting device. In typical toasters the first and second portions support the sidewalls of a food article as for instance a toast, which is positioned vertically in the toaster, for instance vertically into a vertical cavity of the toaster.

According tothe present invention, the foldable food article holder may further comprise one, two, or more additional portions (flaps) which may be operatively coupled or connected as to allow receiving a food article by folding out of the unfolded state over or around the food article (in a certain view at least partially over or around, preferably supporting such that said food article cannot move with respect to the folding food article holder anymore, possibly completely wrapping the food article) and for, in the folded state, being inserted into the toasting device for toasting the food article by being exposed to a heating means within the toasting device.
According to preferred embodiments the food article is a toast comprising at least two slices of bread and a filling in between those slices. The filling can comprise moisture, fat, acids or liquids as for instance water. The filling can for instance comprise cheese, tomatoes, salad, egg (boiled or initially raw), etc. Other configurations of food article can be used: for instance a single slice of bread covered with a slice of ham (and without a second slice of bread on top).

According to preferred embodiments of the present invention, the first portion and the second portion can be connected to each other by means of a single fold, or similar connection of the hinge-type. The folding food article holder may be formed out of a single sheet of grating or mesh, for instance a rectangular sheet, which is folded in two and thus comprises a single fold at its central portion (e.g. in the middle of the length direction of the sheet). The central portion may be impermeable to food and/or liquid. The central portion may therefor be covered by one or more impermeable sheets. It has surprisingly been found that with the above embodiment a typical toast comprising two slices of bread with a filling comprising cheese can be toasted without having crumbs or melted cheese leaving the folding food article holder. This is due to the dimensions of the openings in the grid and the substantial vertical orientation of the fist and second portions when toasting, as well as to the melted cheese which has a viscosity which is high enough, e.g. being substantially less liquid than water.

According to preferred embodiments, the folding food article holder comprises a connecting portion connecting the first and the second portion. The connecting portion is preferably impermeable to food and/or liquid, but not necessarily. The folding food article holder can for instance consist of the first and second portion and the connecting portion, for instance further comprising one or more impermeable sheets near its central portion. It can possibly further comprise manipulation means which will further be described. The same finding as for the folding food article holder with the single fold applies; a typical toast comprising two slices of bread with a filling comprising cheese can be toasted without having crumbs or melted cheese leaving the folding food article holder.

The presence of an optional connecting portion which is impermeable to food and/or liquid, and which is typically adapted for being arranged at least partially or completely under the food article when the food article and folding food article holder is positioned within the toasting device, is that moisture, fat, acid, water and other substances which would released from the food article, and which would run down from the inside of the toast, or from the outside (for instance along vertically positioned fibres of the fibre mesh) can be captured and collected by said impermeable portion. These substances are then automatically released from the toasting device when removing the folding food article holder.

Preferably, the folding food article holder is configured such that the connecting portion is hingedly connected to the first and the second portion or sidewall. Such a hinged connection can be made by a, preferably predefined, fold in a piece of fibre grating or mesh. Alternatively the hinged connection can comprise another connection of the hinge type, as for instance one or more hinges.

According to preferred embodiments of the present invention, the folding food article holder can be made of a single sheet of mesh or grating. The single sheet can for instance be rectangular in shape. At its central portion, corresponding to the connecting portion and optionally a lower part of the first and second portions, a sheet of non-permeable to food and/or liquid material can be applied, as for instance welded or glued or attached in any other temperature resistant attachment means known to the skilled person.
This sheet can be made for instance from a fluoropolymer, as for instance polytetrafluoroethylene (PTFE), fluorinated ethylene propylene (FEP) or perfluoroalkoxy (PFA). Alternatively, the sheet can comprise a closed glass or Kevlar fiber grating covered or impregnated with polytetrafluoroethylene (PTFE), fluorinated ethylene propylene (FEP) or perfluoroalkoxy (PFA). The presence of polytetrafluoroethylene (PTFE), fluorinated ethylene propylene (FEP) or perfluoroalkoxy (PFA) allows the welding of the sheet to the mesh or grating. According to preferred embodiments of the present invention, the foldable food article holder, in a certain view of the cross-type, may further comprise a third and a fourth portion (third or fourth flap) which can be folded and unfolded, e.g. which are hingedly connected, with respect to the connecting portion. The properties of the third and fourth portion can be similar to those of the first and second portion. For a rectangular connecting portion, the first and second portions may be connected to the sides of the connecting portion in the length direction, while the third and fourth portions may be connected to the sides of the connecting portion in the width direction. The third and fourth portions may provide further support to the side surface of the food article when the foldable food article holder is in folded state, or may avoid dropping out of any ingredients or filling from the sides of the of the food article / toast, into the toasting device, which is to be avoided.

According to preferred embodiments of the present invention, the first and the second portions are adapted for engaging with each other when comprising the food article. This can for instance be achieved by having the upper rims of the folding food article holder, considered when the folder is inserted in a toasting device, ending on a set of fiber extensions, for instance by cutting the fiber mesh or grating in between (e.g. in the middle of) two directly adjacent fibres along a direction parallel to such fibres (in the above view: horizontal direction). Extending fibre ends are thereby generated. This as opposed to cutting the fiber mesh just above and along a certain fiber, ending up without such fibre extensions. Such extensions of the first portion may then be used to engage with openings of the mesh in the second portion, when the folding food article holder is in its folded state. In embodiments where the first and second portion of the folding food article holder both comprise fibre extensions as described above, those extensions may still operate together in blocking shifting of both portions with respect to each other along a direction defined by the contact region of the first portion and the second portion in folded state, by being brought in an inter digitated position.

According to the present invention, the fiber or mesh or grating is coated or impregnated with an anti-sticking material. The fiber, glass or Kevlar based, is not or only little heat conductive. Preferably the coating is not or only little heat conductive. This brings the advantage that the folding food article holder can be manipulated by hand, without risk of burning. Preferably such manipulation can be performed in an area of the folding food article holder which does not comprise the food article.

According to preferred embodiments of the present invention, the anti-sticking material comprises a fluoropolymer, as for instance polytetrafluoroethylene (PTFE), fluorinated ethylene propylene (FEP) or perfluoroalkoxy (PFA).

According to preferred embodiments of the present invention, a weight ratio of the anti-sticking material to the fiber is within the range of 20% to 70%, more preferably within the range of 30% to 65%, even more preferably in the range of 40% to 60%.

According to preferred embodiments of the present invention, the fiber based mesh or grating has a density within the range of 250 to 750 g / m2, more preferably within the range of 300 to 500 g / m2.

According to preferred embodiments of the present invention, the fibres or coated or impregnated fibres have an average thickness larger than 0.1 mm, more preferably above 0.3mm, or above 0.5 mm, even more preferably above 1 mm.

This provides the advantage that the folding food article holder constitutes a spacer in between a metal, heat conducting, toast holder which is typically present internally within the toaster, more specifically internally within the cavity of the toaster for receiving the toast for toasting. This may then cause the food article, especially the toast, not or less to be in contact with the metal toast holder, which may reduce heterogeneous browning of the toast, or which may reduce burned stripes at positions corresponding to the contact surface between the toast and the metal toast holder. Another advantage is that the mesh or grating is sufficiently rigid, while at the same time, preferably, not being completely rigid (as is the case for instance for metal food article holders).

According to preferred embodiments of the present invention, the fibres or coated or impregnated fibres have an average thickness smaller than 2.5 mm, more preferably smaller than 1.4 mm. For larger thicknesses some of the advantageous effects according to embodiments of the present invention may become less important.

According to preferred embodiments of the present invention, the fibres or coated or impregnated fibres have a thickness within the range of 0.5 to 2.5 mm, more preferably within the range of 0.8 to 1.4 mm.

According to preferred embodiments, the fibre mesh or grating, comprising the fibres or coated or impregnated fibres, has a thickness within the range of 0.5 to 5 mm, more preferably within the range of 0.5 to 2.8 mm, even more preferably within the range of 0.8 to 2.8 mm.

According to preferred embodiments of the present invention, the folding food article holder further comprises a manipulation means for manipulating the folding food article holder when inserting the folding food article holder into or removing the folding food article holder from the toasting device.
This provides the advantage that the folding food article holder can more easily be manipulated. Moreover the manipulation means can be such that it does not come in contact with the food article during the toasting process, and thus remains clean, which improves comfort to the user.

According to preferred embodiments of the present invention, the mesh or grating is a mesh made by warp knitting, braiding or weaving (for instance leno weaving). The use of these types of meshes or gratings automatically results in a non-flat surface. More specifically, thickness variations of the grating or mesh occurs depending on the location within the grating, and along the grating. Such thickness variation causes a reduced contact surface between the toast and the folding food article holder, without impacting the stability. This implies for instance that a larger portion of the toast is left open for exposure to air circulation and/or radiative heat absorbance, which may result in improved toasting.

According to the present invention, the mesh or grating openings having a surface between 2 x 2 mm² and 10 x 10 mm². More preferably the mesh or grating openings have a surface between 4 x 4 mm² and 8 x 8 mm².
According to a second aspect of the present invention, a toasting system is disclosed comprising:
- a toasting device adapted for receiving a folding food article holder according to embodiments of the first aspect;
- a food folding food article holder according to embodiments of the first aspect.

According to preferred embodiments of the present invention, the toasting device comprises a fixation means adapted for coupling with the said folding food article holder or with said manipulation means of the food folding food article holder. This provides the advantage of improved stability of the system (folding food article holder) - toaster.

Typically, the toasting device has a toasting cavity for toasting food articles, the toasting cavity having a usable depth with respect to a main surface of an external housing of the toasting device (maximum height of a toast without extending from upper surface of the housing of the toast, when being inserted in the toaster). The folding food article holder preferably has a height which is larger than the usable depth, such as to extend outwards from the main surface, when being inserted in the cavity in folder state. In embodiment without additional manipulation means, this allows grabbing the extending portions of the first and second portions for manipulating the toast.

According to a third aspect of the present invention, the use of a folding food article holder according to any of the embodiments of the first aspect is disclosed, wherein the folding food article holder is inserted into a toasting device applying device when in operation.

According to a fourth aspect of the present invention, a method for preparing a food article is disclosed, comprising using a toasting system according to any of the embodiments of the second aspect, comprising
- inserting the folding food article holder into the toasting device;
- applying heat to the food article in the folding food article container by the toasting device.

### BRIEF DESCRIPTION OF THE DRAWINGS

Further features of the present invention will become apparent from the drawings, wherein:
FIG. 1A is a schematic representation of a top view of a folding food article holder according to embodiments of the present invention, in unfolded state.
Fig. 1B is a schematic representation of a top view of a folding food article holder according to another embodiment of the present invention, in unfolded state.
Fig. 1C is a schematic representation of a top view of a folding food article holder according to another embodiment of the present invention, in unfolded state.
Fig. 1D is a schematic representation of a top view of a folding food article holder according to another embodiment of the present invention, in unfolded state.
Fig. 1E is a schematic representation of a top view of a folding food article holder according to another embodiment of the present invention, in unfolded state.
Fig. 1F is a schematic representation of a top view of a folding food article holder according to another embodiment of the present invention, in unfolded state.
Figures 2, 3 and 4 show different embodiments corresponding to detail A of Fig. 1A.
Fig. 5 and Fig. 6 illustrate the advantages of embodiments according to the present invention, relating to the open fiber grating or mesh being woven.
Fig. 7A and Fig. 7B show top views of folding food article holders according to embodiments of the present invention comprising additional manipulation means.
Fig. 8 is a schematic representation of a top view of a folding food article holder according to embodiments of the present invention in unfolded state, similar to the embodiment depicted in Fig. 1A, but with an elliptical connecting portion.
Fig. 9A and Fig. 9B illustrate a front view and cross-sectional view of the embodiment of Fig. 7A.
Fig. 10A shows a cross-sectional view of an embodiment as depicted in Fig. 9 B in a toaster. Fig 10B illustrates a similar embodiment without additional manipulation means, but wherein the folding food article holder extends outside of the toaster when being inserted.
Fig. 11 illustrates a similar system as the one shown in Fig. 10A but with a toaster comprising fixation means.
Fig. 12 shows a top view of a template for a folding food article holder in unfolded state.
Fig. 13A and 13B illustrate cross-sectional side views of a food article holder according to embodiments of the present invention, when containing a toast, for a food article holder comprising only a single or two folding lines respectively.
Fig. 14 shows a cross-sectional side view of a generic food article holder according to embodiments of the present invention, being manipulated by a hand of a user.
Fig. 15 illustrates a typical slice of bread, typically used for preparing toasts.
Fig. 16 illustrates the embodiment according to Fig. 1C in more detail. Fig 16A shows a cross-sectional side view, Fig. 16B illustrates a frontal view of the holder in folded state, and Fig. 16C illustrates a top view of the holder in folded state, looked upon from above as indicated by the "eye" in Fig. 16A.

### DETAILED DESCRIPTION OF EMBODIMENTS

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

In the drawings, like reference numerals indicate like features; and, a reference numeral appearing in more than one figure refers to the same element.

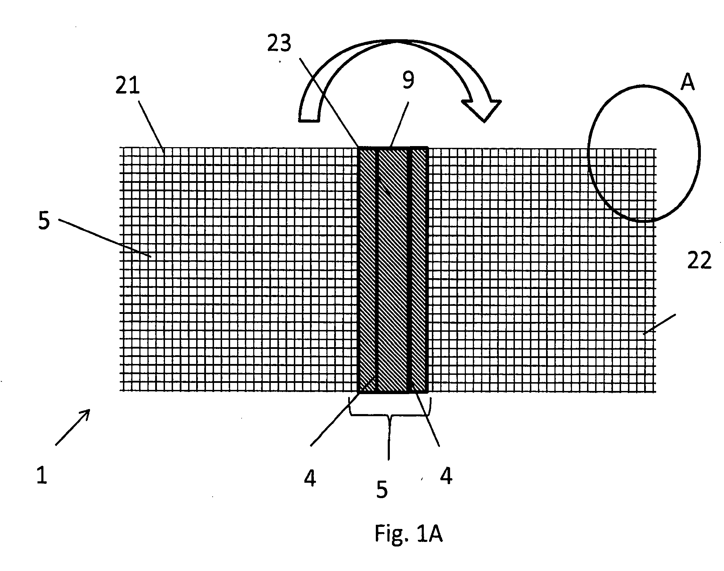

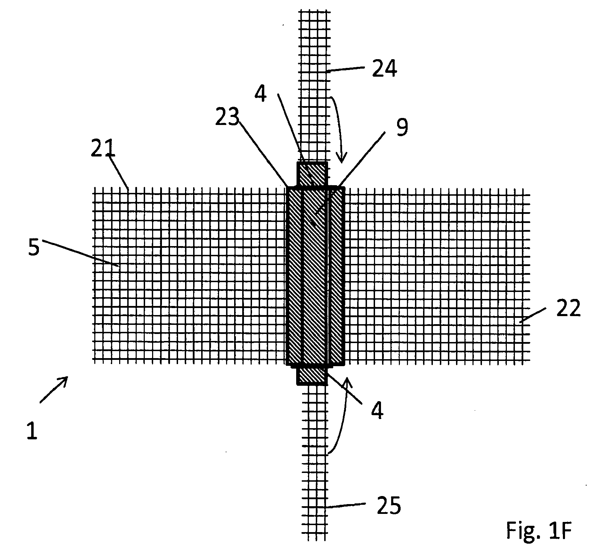

FIG. 1A is a schematic representation of a top view of a folding food article holder 1 according to embodiments of the present invention, in unfolded state.
A first portion or flap 21 and a second portion or flap 22 are connected by means of a connecting portion 23. The first portion and second portion comprise a glass or Kevlar fibre based mesh or grating. The connecting portion 23 can for instance be made out of a single, same mesh as the first and second portion, and folding lines 4 may be present in between the connecting portion 23 and each of the first and second portions 21, 22. The connecting portion, and optionally a lower portion of the first and second portion 21, 22 (viewed when the holder is inserted in a toasting device 7), in other words the central portion 5, of the fibre grating may be provided with one or more liquid and/or moisture and/or dirt impermeable sheets 9, preferably on the inside (corresponding to the inside surface when in folded state) of the folding food article holder, but possibly also on the outside, or on both sides. In folded state the folding food article holder is folded along the folding lines (or other connections of the hinge-type or pivot-type) and substantially wraps a food article, for instance a toast, by supporting the bottom portion of the toast by means of the connecting portion, and the side surfaces (front and back main surfaces) of the toast by means of the first portion 21 and second portion 22. When preparing a toast, this can be performed on one of the two internal surfaces of the folding food article holder in unfolded state. Typically a first slice of bread can thereby be provided first. Once the toast is ready, by putting filling or covering ingredients on the first slice, and by typically but not necessarily putting a second slice of bread on the filling, the non-covered portion of the two portions 21, 22 is flipped over the toast ingredients, substantially fixing their position and/or relative position. It can be noted that the shapes of the portions 21 and 22 and of the connecting portion 23 may be different from rectangular. Furthermore the width of the connecting portion preferably corresponds to the thickness of a toast, for instance in between 0.5 cm (for instance a single slice of bread) and 6 cm, more preferably between 1 and 3 cm. The width of the connecting portion w preferably corresponds to the width (thickness) of typical toast bread, and can be for instance in between 10 and 25 cm, or for instance in between 10 and 20 cm. More preferably, the width w of the connecting portion (for instance a rectangular connecting portion) is at least a bit smaller than the width (thickness) of a typical toast bread, or smaller than the width (or thickness) of a predetermined type of toast bread (envisaged for instance based on geographical location and associated customs), and can for instance be smaller than 3 cm, smaller than 2.5 cm, smaller than 2 cm, smaller than 1.5 cm, smaller than 1 cm, smaller than 0.5 cm. In the limit case, the connecting portion has a width equal to 0, corresponding to the case with a single folding line connecting the first and second portions. This provides the advantage that the first and second portions 21, 22 will be bent around the lower corners of the toast 8, thereby exerting a compressing force on the lower portion of the toast 8, which helps in containing the filling 82 of the toast. The height of the first and second portion is preferably equal of larger than the typical height of toast bread. The height can for instance be about 5 cm larger than the typical height of toast bread. One could also consider that many toast breads have the about the same height and width. When described relative to an associated toaster, the height of the first and second portions 21 and 22 is preferably higher then the total depth between the maximal insertion depth of the toast/folding food article holder 1 in the toaster 7, for instance about 2 to 5 cm higher. In such case the folding food article holder 1 can extend outwards from a top main surface of the housing of the toaster, or from the surface defining the opening towards the toasting cavity within the toaster 7, which allows easy manipulation. It will be appreciated that in a system comprising a toaster and a folding food article manipulation means the dimensions of the folding food article holder (especially the length and width of the connecting portion 23) and the opening and cavity for toasting of the toaster are corresponding.
Another embodiment is depicted in Fig. 1F. This embodiment is similar to the embodiment of Fig. 1A, but further comprises a third flap 24 and fourth flap 25, and is of the cross-type. The third flap 24 and a fourth flap 25 which can be folded and unfolded, e.g. which are hingedly connected, e.g. by means of further folds or folding lines 4, with respect to the connecting portion. The properties of the third and fourth portion are preferably similar to those of the first and second portion. The connecting portion is rectangular, but this is not necessary. The first and second portions are connected to the sides of the connecting portion in the length direction, while the third and fourth portions are connected to the sides of the connecting portion in the width direction. The third and fourth portions provide further support to the lateral surface of the food article when the foldable food article holder is in folded state, or may avoid dropping out of any ingredients or filling from the sides of the of the food article / toast, into the toasting device, which is to be avoided. In order to form a "wrap", the third and fourth portions preferably cooperate with the first and second portions. Preferably the third flap 24 and fourth flap 25 are provided with one or more impermeable sheets 9 near their lower portion (when viewed in a vertical toaster), i.e. near the central portion of the folding food article holder 1, as depicted in Fig. 1F. The properties of this impermeable sheet 9 are the same as described for the other sheets 9 applied to the central portion 5 of the folding food article holder 4.
Note that when reference is made to embodiments comprising different sheets 9, those may be provided in a single sheet or a reduced number of sheets.

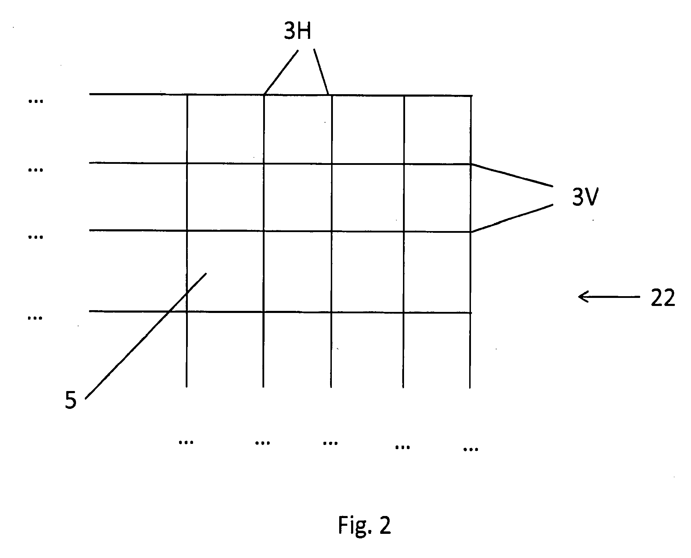

Options for detail A of Fig. 1A are further described in relating with Figures 2, 3 and 4. The same options apply of course for the 3 other angles of the folding food article holding means. The fibre grids for use in the context of the present invention comprise glass fibre impregnated or coated with an anti-sticking material, as for instance but not only a fluoropolymer. A non exhaustive list of examples of such materials is for instance polytetrafluoroethylene (PTFE), fluorinated ethylene propylene (FEP) or perfluoroalkoxy (PFA). The impregnation can be such that the weight-fraction of anti-sticking material to glass fibre for the fiber mesh (without the extra sheet(s) in the central portion) is in between 20 and 70 percent (thus less anti-sticking to fibre material).
Preferably, the fibre and coating of impregnating materials, as well as the sheet near the central portion, are resistant to toasting temperatures ( for instance preferably, but not exclusively, temperatures below 260 degrees Celcius, preferably within the range from 0 degrees, or from 50 degrees, or from 75 degrees, or from 100 degrees, to 260 degrees Celcius) ; i.e. they do not melt and they do not release substances which would be harmful to the person eating the toast / using the toaster and folding food article holder.
The open meshes have mesh openings which allow the passage of air circulation, and preferably have sizes in between 2x2 mm² to 10x10 mm². The openings are not necessarily square. They may for instance be rectangular or may have more complex shapes. Not all opening need to have the same size; for instance at different portions of the first portion 21 of second portion 22, different sizes op openings may be foreseen. The size of the opening may for instance be smaller at a lower portion of the folding food article holder, an in that area more pressure of the toast can be expected. Alternatively, when deformation of the folding food article holder is not a problem, the openings can have a larger size a the lower portions of the first and second portions, and a smaller size at the upper portions; this may compensate for the fact that more air circulation is expected near the opening of the toasting cavity of toaster than at the bottom of the cavity / toaster.

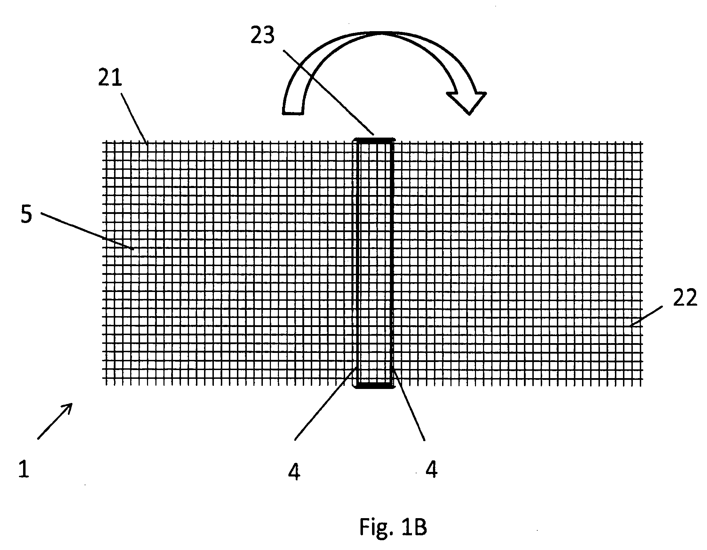

Fig. 1B illustrates a further embodiment according to aspects of the present invention, wherein the central portion does not comprise an impermeable sheet 9. This embodiment may be advantageous for toasting a single slice of bread for instance, without being filled / covered with ingredients.

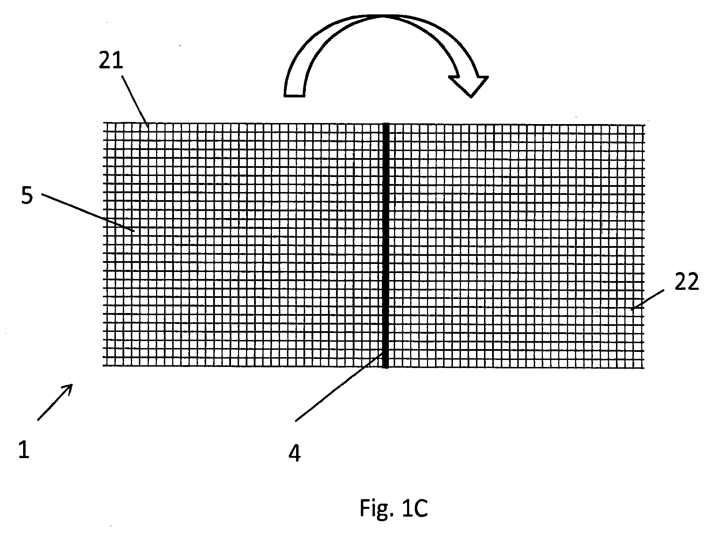

Fig. 1C illustrates a further embodiment according to aspects of the present invention, wherein the first portion 21 and the second portion 22 are connected to each other by means of a single fold 4, or similar connection of the hinge-type. The folding food article holder may be formed out of a single sheet of grating or mesh, for instance a rectangular sheet, which is folded in two and thus comprises a single fold at its central portion (e.g. in the middle of the length direction of the sheet).

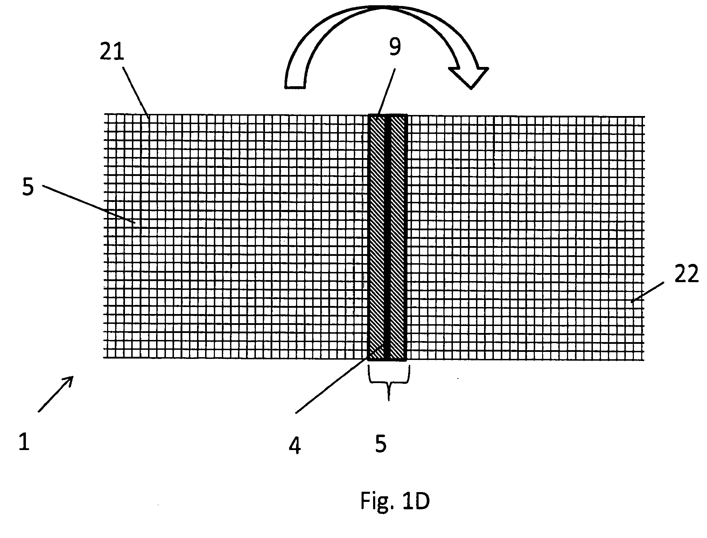

Fig. 1D shows still another embodiment according to aspects of the present invention, wherein the central portion 5 is impermeable to food and/or liquid. The central portion 5 can therefor be covered by one or more impermeable sheets 9, as depicted in Fig. 1D. The impermeable sheet is preferably provided near the middle of the rectangular sheet of grating or mesh substantially forming the foldable food article holder.

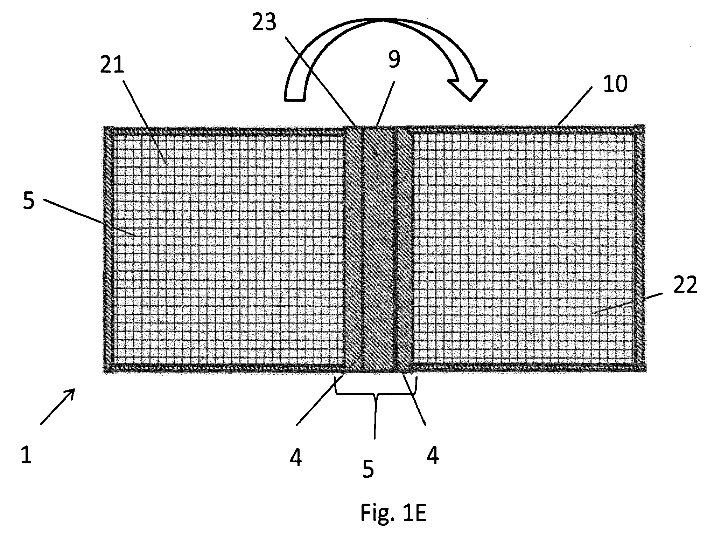

Fig. 1E depicts a further embodiment of the present invention, which is based on the embodiments described in relation to Fig. 1A, but which further comprises one or more sheets 10 of impermeable material, the material properties of which preferably corresponding to those described for the sheet(s) 9, applied along the borders of the folding food article holder. The sheet or sheets 10 are arranged along those borders in order to protect the borders, especially the extending portions of fibres along these borders, as they may start unraveling, disentangling or disentwining after extensive use and/or cleaning of the folding food article holder.

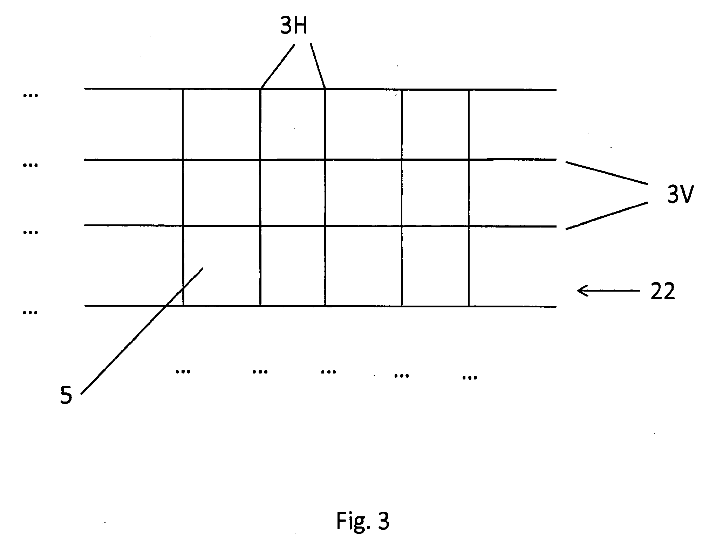

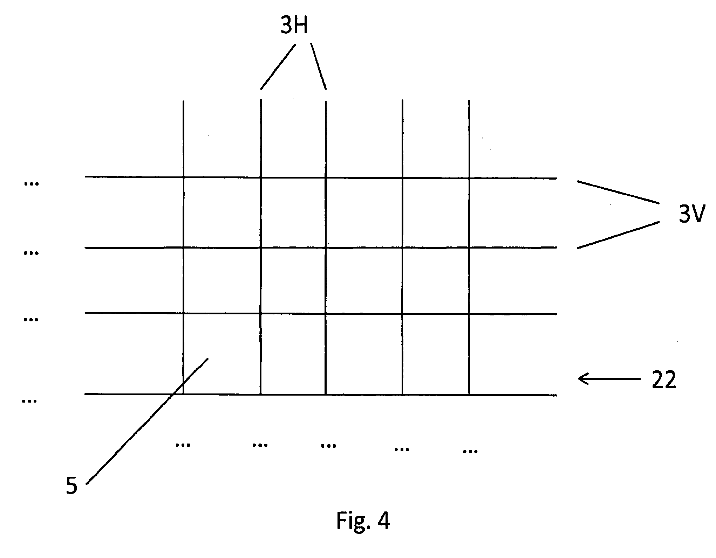

Fig. 2 illustrates an angle of the folding toast holder, wherein the vertical fibres (3V) do not extend from the grating in a plane defined by the grating when lying flat, nor the horizontal fibres (3H). Horizontal and vertical refer to the position when the folding toast holder is inserted into a vertical toaster. The outer rim of the first and second portion, in a plane defined by the grating when lying flat is thus substantially flat or smooth.
Alternatively the vertical fibres may extend from the grating in a plane defined by the grating when lying flat, as depicted in Fig. 3. This when the corresponding portions of portion 21 and 22 are brought in vicinity, towards contact, the extensions may guide such a movement (alignment). Moreover, once in contact and inter digitated, the extending portions collaborate in avoiding that both portions 21 and 22 are shifted with respect to each other along a direction parallel to the 3H-direction.
Alternatively, the vertical fibres 3V as well as horizontal fibres 3H may extend from the grating in a plane defined by the grating when lying flat, as illustrated in Fig. 4. The extensions of the fibres of the first portion 21 may then cooperate with holes or extensions of the second portion 22 or vice versa in order to at least partially fix the position of the first portion 21 and the second portion 22.
In another alternative, not depicted, only the horizontal fibres 3H may extend from the grating in a plane defined by the grating when lying flat. The extensions of the horizontal fibres of the first portion 21 may then cooperate with holes or extensions of the second portion 22 or vice versa in order to at least partially fix the position of the first portion 21 and the second portion 22. This may involve bowing of one or both of the first portion 21 or second portion 22.

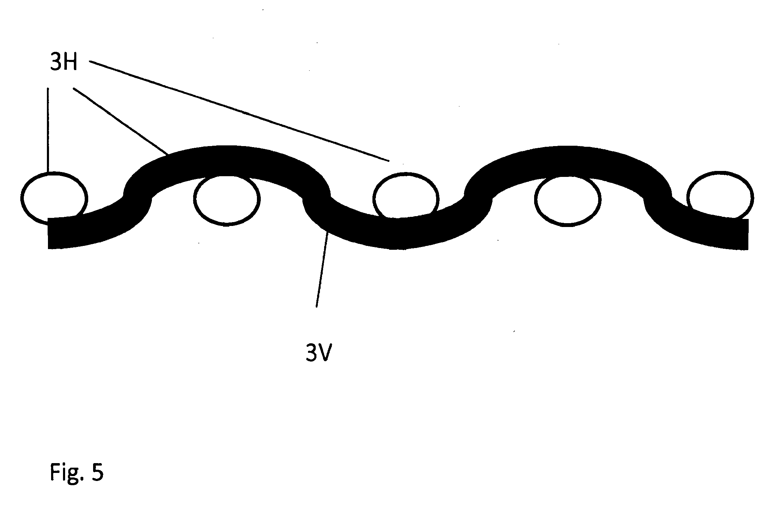

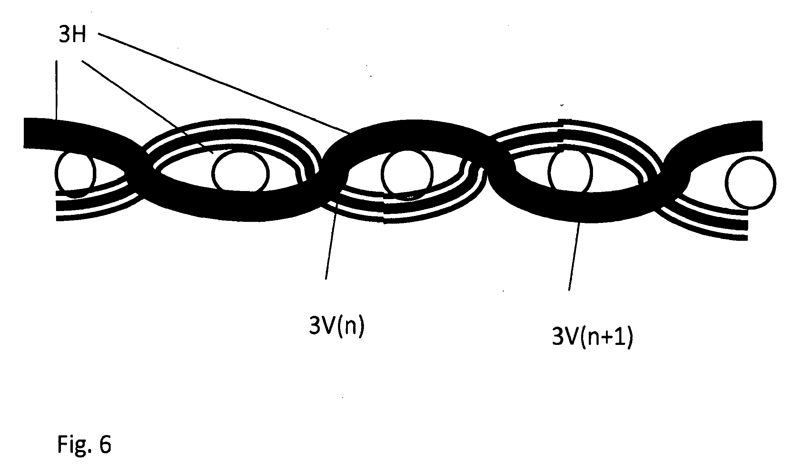

Fig. 5 and Fig. 6 illustrate the advantages of embodiments according to the present invention, relating to the open fiber grating or mesh being woven. The fibres according to embodiments of the present invention preferably have a thickness in between 0.1 and 2.5 mm. When they are woven, but also when they are made by warp knitting or braiding, they introduce a non-flat topology in the resulting mesh or grating. As wires go for instance up and down, over and under other fibres laying typically in a perpendicular direction thereto, the topology varies when moving along the surface of the fibre mesh or grating. This may reduce the total contact surface between the mesh or grating and the food article or toast, and may improve toasting experience, as it may for instance influence airflow circulation. Moreover it may contribute to a more homogeneous toasting of the toast surface. Fig. 5 illustrates a single vertical fibre 3V being woven over a set of horizontal fibres. Fig. 6 is based on Fig. 5 but shows two vertical fibres 3V(n) and 3V(n+1). Note that both meshes or gratings are of the open type.

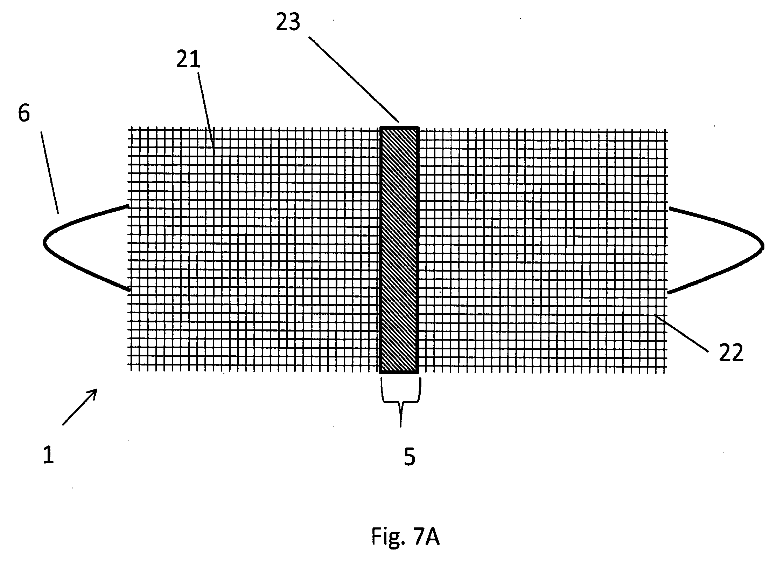

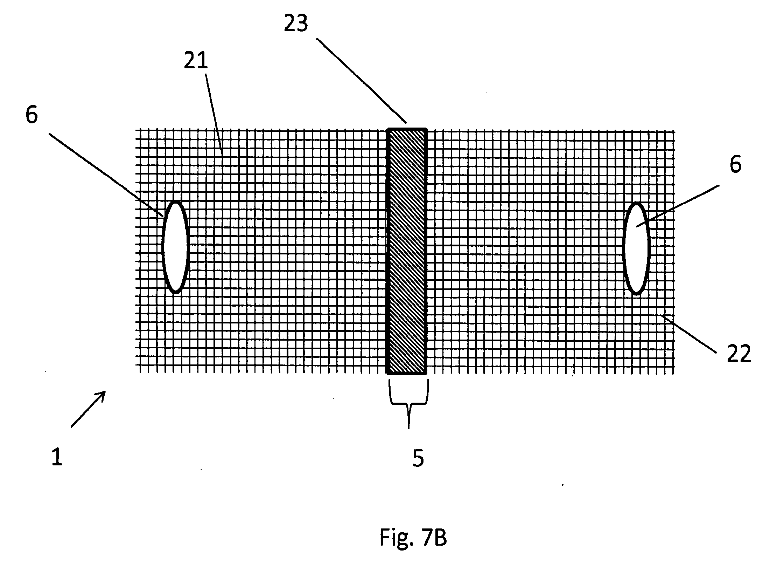

Figures 7A and 7B show top views of folding food article holders according to embodiments of the present invention, similar to the device depicted in Fig. 1A, but comprising two additional manipulation means 6. The additional manipulation means may for instance comprise two handles or loops attached to the end portions of the folding food article holder, as for instance to the upper rim, or to the upper portion, of the first and second portion (viewed when being inserted in a vertical toaster), as depicted in Fig. 7A. Alternatively, as depicted in Fig. 7B, each of the first and second portions may be provided with an opening 6, e.g. punch through holes, near their upper portion (viewed when being inserted in a vertical toaster). The respective openings of the first and second portion are preferably overlapping when the folding food article holder is in folded state. The presence of additional manipulation means may improve handling.

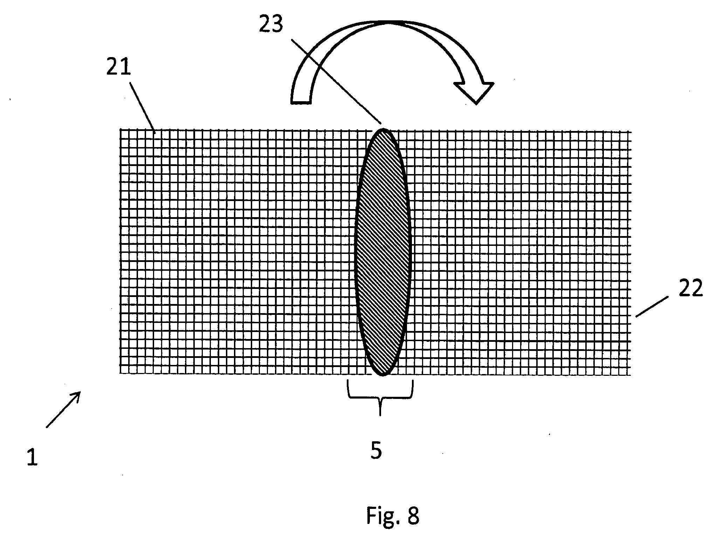

Fig. 8 is a schematic representation of a top view of a folding food article holder 1 according to embodiments of the present invention in unfolded state, similar to the embodiment depicted in Fig. 1A, but with an elliptical connecting portion 23. The use of an elliptical connecting portion 23 may more easily allow a curvature or bowing in the first portion 21 and second portion 22, which may be handy for certain types of food articles or toasts. Moreover, this may simplify cooperation of horizontally extending fibres 3H of the first portion 21 with holes 5 of the second portion 22.

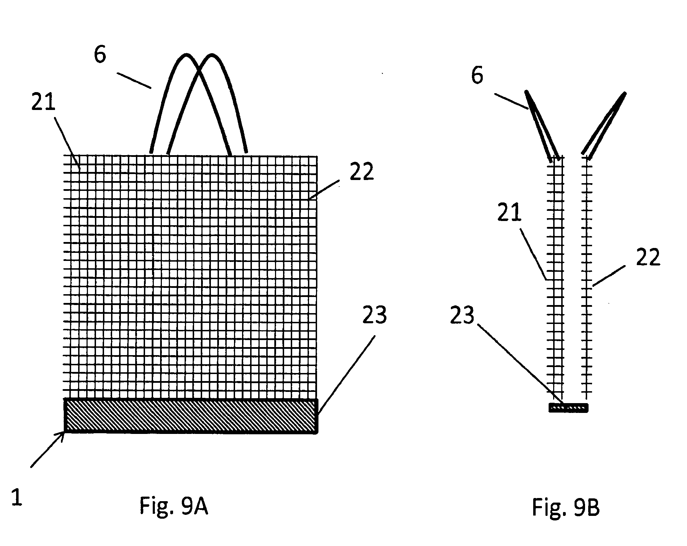

Fig. 9A and Fig. 9B illustrate a front view and cross-sectional view of the embodiment of Fig. 7A. The impermeable sheet is covering the connecting portion 23 and the lower part of the first portion 21 and the second portion 22.

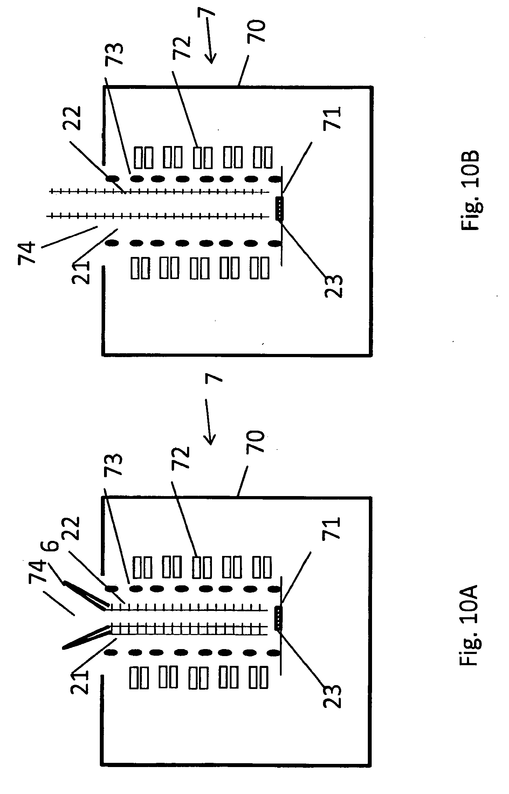

Fig. 10A shows a cross-sectional view of an embodiment as depicted in Fig. 9B in a toaster 7. The toaster 7 comprises a housing 70, an opening 74 in the housing giving access to the toasting cavity. A toast or folding toast holder device can access the cavity no further than a bottom level 71. A typical toaster comprises heating elements 72 positioned adjacent to the toast within the toasting cavity, and which are typically separated from the toast by metal, heat conducting, toast holder 73. The height of the folding food article holder corresponds to the depth of the cavity, i.e. with the distance between the bottom level 71 and the level corresponding to the opening 74 in the housing 70. The additional manipulation means 6 are provided to easily remove the folding food article holder 1 from the toaster.

Alternatively, as depicted in Fig 10B, the folding food article holder extends outside of the toaster when being inserted, the upper portion of the first and second portions constituting a manipulation portion for the folding food article holder 1.

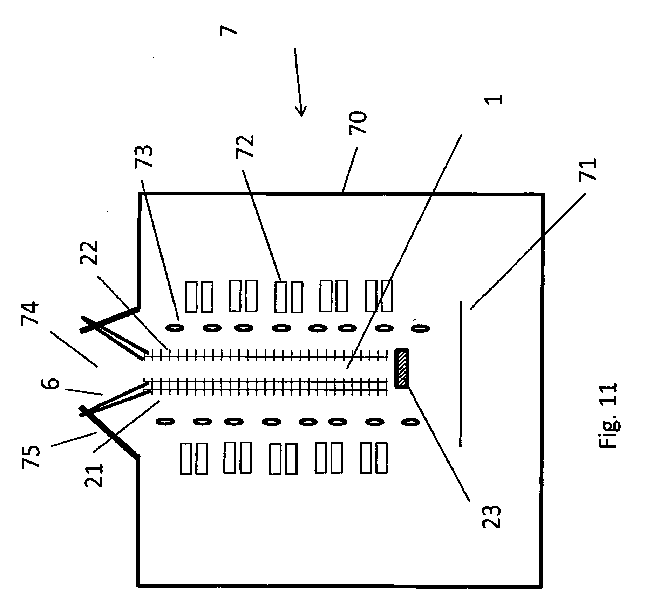

Fig. 11 illustrates a similar system as the one shown in Fig. 10A but with a toaster comprising fixation means 75. The fixation means can be applied close to the opening 74, and may comprise for instance hooks, clips or pins to which the manipulation means 6 can be attached. It will be appreciated that such system allows the hanging of the folding food article holder 1 in the toasting cavity. This allows the correct positioning of the toaster without the need of a bottom level 71 on which the folding food article holder rests when being inserted in the toaster. The fixation means 75 also brings more stability to the system. It will moreover be appreciated that folding food article holders 1 of different sizes can be used for the same toaster, or that a relatively small folding food article holder 1 can be used with a relatively large toaster 7.

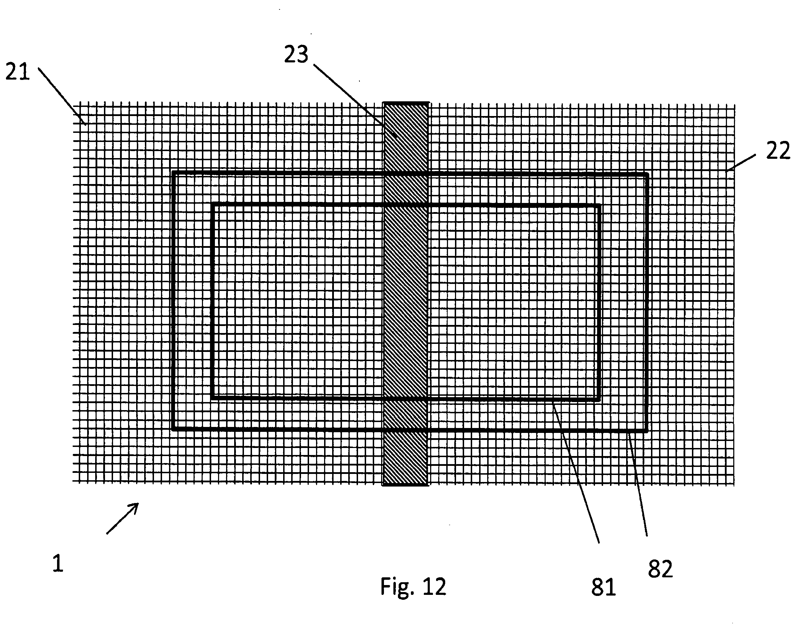

Fig. 12 shows a top view of a template for a generic folding food article holder in unfolded state. According to preferred embodiments, a large generic folding food article holder 1 can be provided with preprinted patterns, e.g. 81, 82, corresponding to predetermined sizes and/or shapes of the folding food article holder, along which the user can cut, allowing him to easily customize the folding food article holder 1 to its actual toasting device (cavity size).

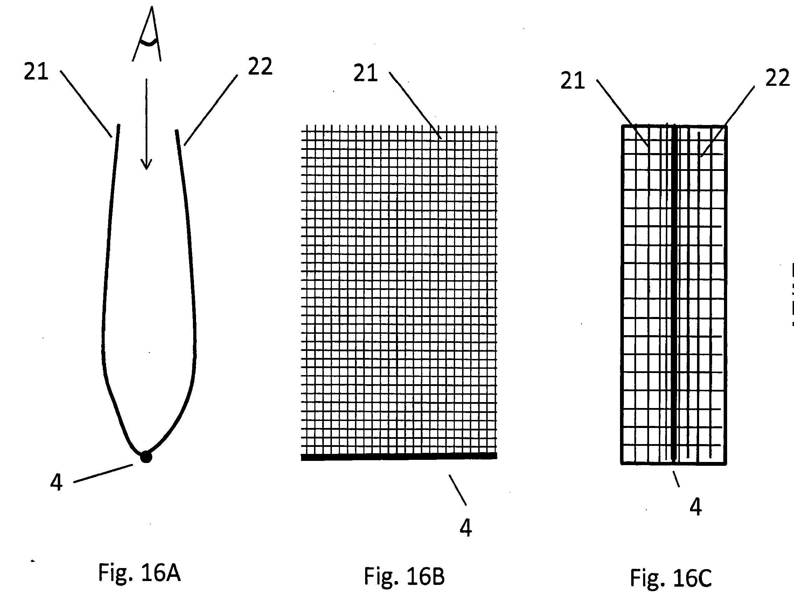

It will furthermore be appreciated that the folding food article holder 1 according to aspects of the present invention, preferably in its generic form as described in Fig. 12, can be used with toasters comprising a defect toast ejection mechanism. Moreover, toaster without an integrated toast ejection mechanism can be conceived, when used with a folding food article holder 1 according to aspects of the present invention.
It has surprisingly been found that with embodiments of the folding food article holder according embodiments of the present invention, for instance as described in relation with Figures 1B and 1C, and not including an impermeable sheet or foil, a typical toast comprising two slices of bread with a filling comprising cheese can be toasted without having crumbs or melted cheese leaving the folding food article holder. This is due to the dimensions of the openings in the mesh and the substantial vertical orientation of the first and second portions when toasting, as well as to the melted cheese which has a viscosity which is high enough, e.g. being substantially less liquid than water. Fig. 16 illustrates the embodiment according to Fig. 1C in more detail. Fig 16A shows a cross-sectional side view, Fig. 16B illustrates a frontal view of the holder in folded state, and Fig. 16C illustrates a top view of the holder in folded state, looked upon from above as indicated by the "eye" in Fig. 16A. Because of the essentially vertical projection from above, possible cheese and crumbs being released from the toast meet a mesh with openings that are virtually smaller.

It will be appreciated that a piece of meat can not be grilled or broiled in a typical toaster, as it typically releases a relatively high amount of water, fat and moisture. This would cause for instance security (e.g. electrical short circuits) and cleaning issues.

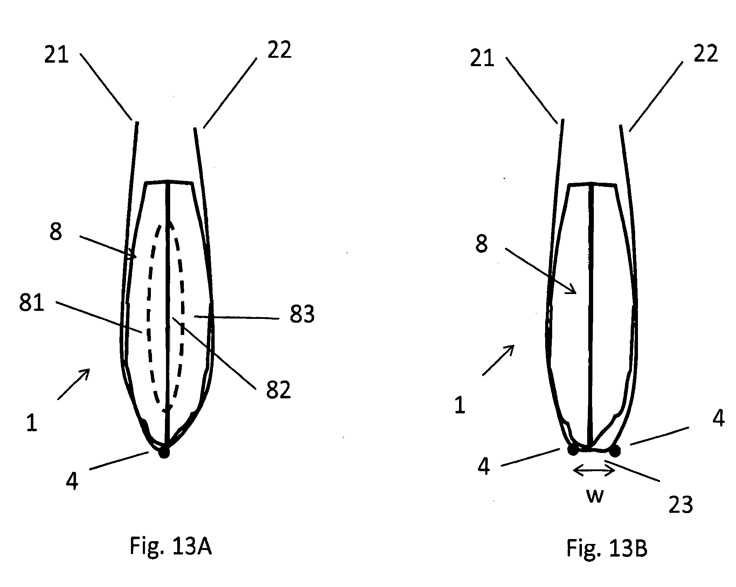

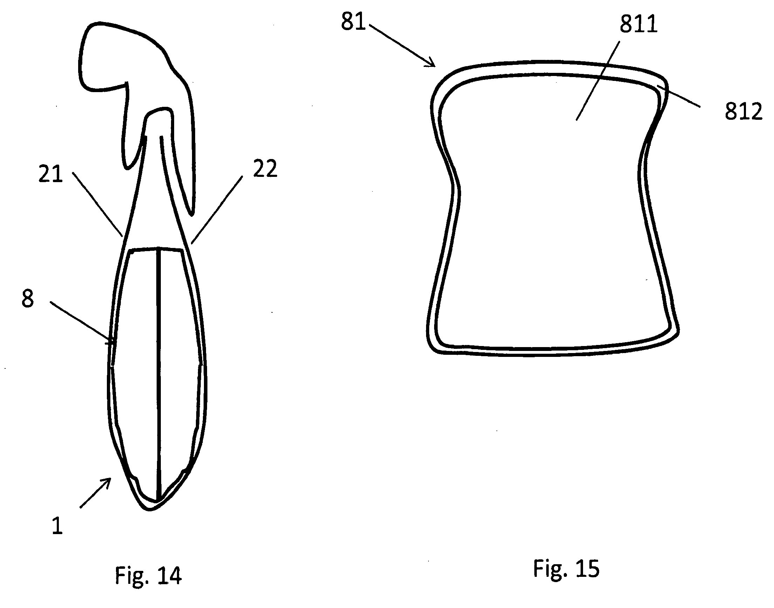

It will be appreciated that metal racks or grilles which are known in the state of the art for toasting sandwiches/toasts, show different disadvantages when compared to the folding food article holder according to embodiments of the present invention. For instance, the metal racks a typically rigid, as they typically comprise fixed, straight metal elements. This rigidity causes a toast 8 to be squeezed, which deforms the toast 8, and induces the risk of loosing filling before or during actual toasting. The squeezing may also result in the fact that ingredients of the toast 8 which are positioned in a central region of the toast are squeezed more than with embodiments of the present invention. This may provide an unwanted effect (e.g. when integrating a rawegg). According to embodiments of the present invention, the toast is optimally shaped and optimally supported to not allow the exit of toast filling. This is illustrated in Fig. 13A for the embodiment of the folding food article holder 1 with the single fold 4, and in Fig. 13B for the embodiment of the folding food article holder 1 with the two folding lines 4 and the connecting portion 23. The flexibility of the side portions 21 and 22 is preferably such that enough support is provided to the toast during the toasting process in order to shape the toast 8 (first slice of bread 81, filling 82 (dotted line), second slice of bread 83), while keeping its ingredients or filling 82 (and the bread slices 81, 83) at the same time in a relatively fixed position. The compressing effect of the lower portions of the side portions (i.e. first and second portions 21 and 22), of the food article holder contributes to this effect. Also the presence of an appropriately dimensioned (for instance having an appropriate width w, see Fig. 13B), connecting portion 23 may further contribute to this optimal shaping effect. Although this effect of efficient containment of the filling within the toast is believed to be generally applicable, it is believed to be even more advantageous when bread slices 81, 83 as depicted in Fig. 15 are used, these bread slices comprising a relatively hard crust 812 and a softer internal part 811. It will further also be appreciated that, while manipulating the toast by keeping the upper portions of the first and second portions 21, 22 together, as depicted for instance in Fig. 14, also the upper portion of the toast undergoes a compressive force which may contribute to containing the filling or internal portion of the toast and/or isolated from a colder external environment. The upper manipulation before and after the toasting may also contribute to the shaping effect of the toast.
These state of the art metal racks also have the disadvantage that the metal elements which they comprise, are provided as bars or cylinders with constant diameter, providing a constant, uninterrupted, and relatively large interface with the toast. According to certain embodiments of the present invention this interface is interrupted, non constant, and relatively smaller, which positively enhances the toasting effect.
Moreover the metal needs to absorb the energy of the toaster first, before it can itself contribute to the toasting of the toast; indeed, initially these metal elements may serve as a heat shield. Also when the toasting process has ended, the metal elements remain hot for a relatively long period (e.g. more than 10, or more than 20 seconds), resulting in the fact that they cannot be manipulated with bare hands. The foldable food article holder according to embodiments of the present invention, based on the fibre based mesh or grating, does absorb and release heat more quickly, and typically provides a smaller contact interface surface with the fingers, and can advantageously be manipulated with bare hands (fingers) without burning oneself, within this period of 20 second, or within the period of 10 seconds, depending on the user's heat tolerance and toasting temperature. This is especially the case for manipulation at the upper region which may remain outside of the toaster during toasting. This results in a better handling and/or quicker serving of the toast. This is illustrated in Fig. 14.

The particular combinations of elements and features in the above detailed embodiments are exemplary only. As those skilled in the art will recognize, variations, modifications, and other implementations of what is described herein can occur to those of ordinary skill in the art without departing from the scope of the invention as claimed. Accordingly, the foregoing description is by way of example only and is not intended as limiting. The invention's scope is defined in the following claims and the equivalents thereto. Furthermore, reference signs used in the description and claims do not limit the scope of the invention as claimed.

## Claims

1. A folding food article holder (1) for heating a food article (8) of the toast type in a toasting device (7), said folding food article holder (1) having at least a folded state and an unfolded state, and being adapted for receiving a food article (8) by folding out of said unfolded state over said food article (8) and for, in said folded state, being inserted into said toasting device (7) for toasting said food article (8), wherein the food article holder (1) comprises an open fibre based mesh or grating,
said food article holder (1) comprising:
a first portion (21) and a second portion (22), said first portion (21) and said second portion (22) comprising an open, fibre based mesh or grating, and being adapted for supporting said food article (8) of the toast type when said folding food article holder (1) is inserted in said toasting device (7), wherein said open fiber based mesh or grating or fiber of said open fiber based mesh or grating is coated or impregnated with an anti-sticking material, the mesh or grating being glass or Kevlar^{™} fiber based, the mesh or grating having openings allowing air circulation and radiative heat passing through, the openings having a surface between 2 x 2 mm² and 10 x 10 mm².

2. A folding food article holder (1) according to claim 1, wherein said first portion (21) and said second portion (22) are hingedly connected by means of a single folding line (4) in said open fibre based mesh or grating.

3. A folding food article holder (1) according to claim 1, further comprising a connecting portion (23) connecting said first and said second portion (21,22).

4. A folding food article holder (1) according to claim 3, wherein said connecting portion (23) is impermeable to food and/or liquid, and/or
wherein said connecting portion (23) is hingedly connected to said first and said second portions, and/or
wherein said connecting portion (23) has a width which is smaller than 3 cm.

5. A folding food article holder (1) according to any of the previous claims, wherein said first and said second portions (21, 22) are adapted for engaging with each other when containing said food article (8).

6. A folding food article holder (1) according to claim 1, wherein said anti-sticking material comprises a fluoropolymer.

7. A folding food article holder (1) according to any of the previous claimswherein a weight ratio of said anti-sticking material to said fiber is within the range of 20% to 70%.

8. A folding food article holder (1) according to any of the previous claims, wherein said fiber based mesh has a density within the range of 250 to 750 g / m².

9. A folding food article holder (1) according to any of the previous claims, wherein said fibres or coated or impregnated fibres, have an average thickness larger than 0.1 mm.

10. A folding food article holder (1) according to any of the previous claims, further comprising a manipulation means (6) for manipulating said folding food article holder (1) when inserting said folding food article holder (1) into or removing said folding food article holder (1) from said toasting device (7).

11. A folding food article holder (1) according to any of the previous claims, wherein the mesh is a mesh made by warp knitting, braiding or weaving.

12. A toasting system comprising:
- a toasting device (7) adapted for receiving a folding food article holder (1) according to any of the previous claims;
- a folding food article holder (1) according to any of the previous claims.

13. A toasting system according to claim 12, wherein said toasting device (7) comprises a fixation means (75) adapted for coupling with said folding food article holder (1) or said manipulation means (6) of said food folding food article holder (1).

14. A toasting system according to claim 12 or 13, wherein said toasting device (7) has a toasting cavity for toasting food articles (8), said toasting cavity having a usable depth with respect to a main surface of an external housing (70) of said toasting device (7), and wherein said folding food article holder (1) has a height which is larger than said usable depth, such as to extend outwards from said main surface, when being inserted in said cavity in a folded state.

15. Use of a folding food article holder (1) according to any of the previous claims 1 to 11, wherein said folding food article holder (1) is inserted into a toasting device (7) when in operation.

16. A method for preparing a food article (8) using a toasting system according to any of claims 12 to 14, comprising
- inserting said folding food article holder (1) into said toasting device (7);
- applying heat to said food in said folding food article holder (1) by said toasting device (7).

## Patentansprüche

1. Zusammenklappbarer Nahrungsmittelhalter (1) zum Erhitzen eines Nahrungsmittels (8) vom Typ Toast in einer Toastvoruchtung (7), wobei der zusammenklappbare Nahrungsmittelhalter (1) mindestens einen zusammengeklappten Zustand und einen aufgeklappten Zustand aufweist und dazu ausgelegt ist, ein Nahrungsmittel (8) aufzunehmen, indem er sich aus dem aufgeklappten Zustand um das Nahrungsmittel (8) herum zusammenklappt, und um in dem zusammengeklappten Zustand in eine Toastvomichtung (7) zum Toasten des Nahrungsmittels (8) eingeführt zu werden, wobei der Nahrungsmittelhalter (1) ein offenes, auf Fasern basierendes Geflecht oder Gitter umfasst,
wobei der Nahrungsmittelhalter (1) Folgendes umfasst:
einen ersten Teil (21) und einen zweiten Teil (22), wobei der erste Teil (21) und der zweite Teil (22) ein offenes, auf Fasern basierendes Geflecht oder Gitter umfassen und dazu ausgelegt sind, das Nahrungsmittel (8) vom Typ Toast zu stützen, wenn der zusammenklappbare Nahrungsmittelhalter (1) in die Toastvomichtung (7) eingeführt wird, wobei das offene, auf Fasern basierende Geflecht oder Gitter oder die Faser des offenen, auf Fasern basierenden Geflechtes oder Gitters mit einem Antihaftmaterial beschichtet oder imprägniert ist, wobei das Geflecht oder das Gitter auf Glasfasern oder Kevlar^{™}-Fasern basiert, wobei das Geflecht oder das Gitter Öffnungen aufweist, die Luftzirkulation ermöglichen und Strahlungshitze durchlassen, wobei die Öffnungen eine Oberfläche zwischen 2 x 2 mm² und 10 x 10 mm² aufweisen.

2. Zusammenklappbarer Nahrungsmittelhalter (1) nach Anspruch 1, wobei der erste Teil (21) und der zweite Teil (22) klappbar mittels einer einzelnen Klapplinie (4) in dem offenen, auf Fasern basierenden Geflecht oder Gitter verbunden sind.

3. Zusammenklappbarer Nahrungsmittelhalter (1) nach Anspruch 1, der ferner einen Verbindungsteil (23) umfasst, der den ersten und den zweiten Teil (21, 22) miteinander verbindet.

4. Zusammenklappbarer Nahrungsmittelhalter (1) nach Anspruch 3, wobei der Verbindungsteil (23) für Nahrung und/oder Flüssigkeit undurchlässig ist, und/oder
wobei der Verbindungsteil (23) klappbar mit dem ersten und dem zweiten Teil verbunden ist, und/oder
wobei der Verbindungsteil (23) eine Breite aufweist, die kleiner als 3 cm ist.

5. Zusammenklappbarer Nahrungsmittelhalter (1) nach einem der vorhergehenden Ansprüche, wobei der erste und der zweite Teil (21, 22) dazu ausgelegt sind, miteinander in Eingriff zu gelangen, wenn sie das Nahrungsmittel (8) enthalten.

6. Zusammenklappbarer Nahrungsmittelhalter (1) nach Anspruch 1, wobei das Antihaftmaterial ein Fluorpolymer umfasst.

7. Zusammenklappbarer Nahrungsmittelhalter (1) nach einem der vorhergehenden Ansprüche, wobei ein Gewichtsverhältnis des Antihaftmaterials zu der Faser in einem Bereich von 20 % bis 70 % liegt.

8. Zusammenklappbarer Nahrungsmittelhalter (1) nach einem der vorhergehenden Ansprüche, wobei das auf Fasern basierende Geflecht eine Dichte im Bereich von 250 bis 750 g/m² aufweist.

9. Zusammenklappbarer Nahrungsmittelhalter (1) nach einem der vorhergehenden Ansprüche, wobei die Fasern oder beschichteten oder imprägnierten Fasern eine durchschnittliche Dicke von mehr als 0,1 mm aufweisen.

10. Zusammenklappbarer Nahrungsmittelhalter (1) nach einem der vorhergehenden Ansprüche, der ferner ein Handhabungsmittel (6) zum Handhaben des zusammenklappbaren Nahrungsmittelhalters (1) beim Einführen des zusammenklappbaren Nahrungsmittelhalters (1) in die Toastvoruchtung (7) oder beim Entfernen des zusammenklappbaren Nahrungsmittelhalters (1) daraus umfasst.

11. Zusammenklappbarer Nahrungsmittelhalter (1) nach einem der vorhergehenden Ansprüche, wobei das Geflecht ein Geflecht ist, das durch Kettenwirkerei, Flechten oder Weben hergestellt wurde.

12. Toastsystem, das Folgendes umfasst:
- eine Toastvoruchtung (7), die dazu ausgelegt ist, einen zusammenklappbaren Nahrungsmittelhalter (1) nach einem der vorhergehenden Ansprüche aufzunehmen;
- einen zusammenklappbaren Nahrungsmittelhalter (1) nach einem der vorhergehenden Ansprüche.

13. Toastsystem nach Anspruch 12, wobei die Toastvoruchtung (7) ein Befestigungsmittel (75) umfasst, das dazu ausgelegt ist, mit dem zusammenklappbaren Nahrungsmittelhalter (1) oder dem Handhabungsmittel (6) des zusammenklappbaren Nahrungsmittelhalters (1) gekoppelt zu werden.

14. Toastsystem nach Anspruch 12 oder 13, wobei die Toastvomichtung (7) einen Toasthohlraum zum Toasten von Nahrungsmitteln (8) aufweist, wobei der Toasthohlraum eine verwendbare Tiefe in Bezug auf eine Hauptoberfläche eines externen Gehäuses (70) der Toastvoruchtung (7) aufweist, und wobei der zusammenklappbare Nahrungsmittelhalter (1) eine Höhe aufweist, die größer ist als die verwendbare Tiefe, so dass er sich von der Hauptoberfläche nach außen erstreckt, wenn er in einem zusammengeklappten Zustand in den Hohlraum eingeführt wird.

15. Verwendung eines zusammenklappbaren Nahrungsmittelhalters (1) nach einem der vorhergehenden Ansprüche 1 bis 11, wobei der zusammenklappbare Nahrungsmittelhalter (1) in eine Toastvorrichtung (7) eingeführt wird, wenn diese in Betrieb ist.

16. Verfahren zum Herstellen eines Nahrungsmittels (8) unter Verwendung eines Toastsystems nach einem der Ansprüche 12 bis 14, das Folgendes umfasst:
- Einführen des zusammenklappbaren Nahrungsmittelhalters (1) in die Toastvomichtung (7);
- Aufbringen von Hitze auf die Nahrung in dem zusammenklappbaren Nahrungsmittelhalter (1) mittels der Toastvorrichtung (7).

## Revendications

1. Support pliable pour produit alimentaire (1) pour chauffer un produit alimentaire (8) du type toast dans un grille-pain (7), ledit support pliable de produit alimentaire (1) ayant au moins un état plié et un état déplié, et étant conçu pour recevoir un produit alimentaire (8) par repliement dudit état déplié sur ledit produit alimentaire (8) et pour, dans ledit état plié, être inséré dans ledit grille-plain (7) pour griller ledit produit alimentaire (8), dans lequel le support de produit alimentaire (1) comprend un treillis ou un maillage à base de fibres ouvertes,
ledit support de produit alimentaire (1) comprenant :
une première partie (21) et une seconde partie (22), ladite première partie (21) et ladite seconde partie (22) comprenant un treillis ou un maillage à base de fibres ouvertes, et étant conçues pour supporter ledit produit alimentaire (8) du type toast lorsque ledit support de produit alimentaire pliable (1) est inséré dans ledit grille-pain (7), dans lequel le treillis ou ledit maillage à base de fibres ouvertes ou la fibre de ladite grolle ou dudit maillage à base de fibres ouvertes est revêtu(e) ou imprégné(e) avec une matière anticollante, le maillage ou le treillis étant à base de fibres de verrue ou de Kevlar™, le maillage ou le treillis ayant des ouvertures permettant à de la circulation d'air et de la chaleur radiante de passer à travers, les ouvertures ayant une surface entre 2 x 2 mm² et 10 x 10 mm².

2. Support pliable pour produit alimentaire (1) selon la revendication 1, dans lequel ladite première partie (21) et ladite seconde partie (22) sont reliées par articulation au moyen d'une ligne de pliage simple (4) dans ledit maillage ou ledit treillis à base de fibres ouvertes.

3. Support pliable pour produit alimentaire (1) selon la revendication 1, comprenant en outre une partie de raccordement (23) reliant ladite première et ladite seconde partie (21, 22).

4. Support pliable pour produit alimentaire (1) selon la revendication 3, dans lequel ladite partie de raccordement (23) est imperméable aux aliments et/ou liquides, et/ou
dans lequel ladite partie de raccordement (23) est reliée par articulation auxdites première et seconde parties, et/ou
dans lequel ladite partie de raccordement (23) a une largeur qui est plus petite que 3 cm.

5. Support pliable pour produit alimentaire (1) selon l'une quelconque des revendications précédentes, dans lequel ladite première et ladite seconde partie (21, 22) sont conçues pour une mise en prise l'une avec l'autre en contenant ledit produit alimentaire (8).

6. Support pliable pour produit alimentaire (1) selon la revendication 1, dans lequel ladite matière anticollante comprend un fluoropolymère.

7. Support pliable pour produit alimentaire (1) selon l'une quelconque des revendications précédentes, dans lequel un rapport pondéral de ladite matière anticollante sur ladite fibre est à l'intérieur de la plage de 20 % à 70 %.

8. Support pliable pour produit alimentaire (1) selon l'une quelconque des revendications précédentes, dans lequel ledit maillage à base de fibres a une densité dans la plage de 250 à 750 g/m².

9. Support pliable pour produit alimentaire (1) selon l'une quelconque des revendications précédentes, dans lequel lesdites fibres ou fibres revêtues ou imprégnées, ont une épaisseur moyenne plus grande que 0,1 mm.

10. Support pliable pour produit alimentaire (1) selon l'une quelconque des revendications précédentes, comprenant en outre un moyen de manipulation (6) pour manipuler ledit support pliable pour produit alimentaire (1) lors de l'insertion dudit support pliable pour produit alimentaire (1) dans ledit grille-pain (7) ou lors de l'enlèvement dudit support pliable pour produit alimentaire (1) de celui-ci (7).

11. Support pliable pour produit alimentaire (1) selon l'une quelconque des revendications précédentes, dans lequel le maillage est un maillage fait par tricotage chaîne, tressage ou tissage.

12. Système de grillage comprenant :
- un grille-pain (7) conçu pour recevoir un support pliable pour produit alimentaire (1) selon l'une quelconque des revendications précédentes ;
- un support pliable pour produit alimentaire (1) selon l'une quelconque des revendications précédentes.

13. Système de grillage selon la revendication 12, dans lequel ledit grille-pain (7) comprend un moyen de fixation (75) conçu pour s'accoupler audit support pliable pour produit alimentaire (1) ou audit moyen de manipulation (6) dudit support pliable pour produit alimentaire (1).

14. Système de grillage selon la revendication 12 ou 13, dans lequel ledit grille-pain (7) a une cavité de grillage pour griller des produits alimentaires (8), ladite cavité de grillage ayant une profondeur utilisable par rapport à une surface principale d'un logement externe (70) dudit grille-pain (7), et dans lequel ledit support pliable pour produit alimentaire (1) a une hauteur qui est plus grande que ladite profondeur utilisable, de façon à s'étendre à l'extérieur de ladite surface principale, lorsqu'il est inséré dans ladite cavité dans un état plié.

15. Utilisation d'un support pliable pour produit alimentaire (1) selon l'une quelconque des revendications précédentes 1 à 11, dans lequel ledit support pliable pour produit alimentaire (1) est inséré dans un grille-pain (7) en fonctionnement.

16. Procédé pour préparer un produit alimentaire (8) en utilisant un système de grillage selon l'une quelconque des revendications 12 à 14, comprenant
- l'insertion dudit support pliable pour produit alimentaire (1) dans ledit grille-pain (7) ;
- l'application de chaleur audit aliment dans ledit support pliable pour produit alimentaire (1) par ledit grille-pain (7).
